# EUROPEAN PATENT SPECIFICATION

(11) **EP 3 891 972 B1**
(45) Date of publication and mention of the grant of the patent: **17.04.2024**
(21) Application number: 19808953.4
(22) Date of filing: 03.12.2019
(51) Int. Cl.: H04M 3/51

(54) **METHOD AND SYSTEM FOR REMOTE INTERACTION BETWEEN AT LEAST ONE USER AND AT LEAST ONE OPERATOR OF THE AUTOMATED TYPE AND OF THE HUMAN TYPE**
VERFAHREN UND SYSTEM ZUR FERNINTERAKTION ZWISCHEN MINDESTENS EINEM BENUTZER UND MINDESTENS EINEM BEDIENER VOM AUTOMATISIERTEN TYP UND MENSCHLICHEN TYP
PROCÉDÉ ET SYSTÈME D'INTERACTION À DISTANCE ENTRE AU MOINS UN UTILISATEUR ET AU MOINS UN OPÉRATEUR DU TYPE AUTOMATISÉ ET DU TYPE HUMAIN

(30) Priority: 04.12.2018 IT 201800010774
(43) Date of publication of application: 13.10.2021
(73) Proprietor: CRIF S.p.A., 40131 Bologna (IT)
(72) Inventor: CINELLI, Andrea, 20146 Milano (IT)
(74) Representative: Penza, Giancarlo
(86) International application number: PCT/IB2019/060399
(87) International publication number: WO 2020/115656

(56) References cited:
- US-A1- 2016 125 884
- US-A1- 2018 227 289

## Description

### TECHNICAL FIELD OF THE INVENTION

The present invention generally relates to the field of remote interaction between at least one user and at least one operator of the automated type and of the human type.

### PRIOR ART

Authentication procedures are well known wherein the identity of a human subject (indicated hereinafter also as "user") who has been identified in a previous identification step is verified online: in the authentication step it is verified in real time that the user (for example, a user of a smartphone or of a personal computer) who wants to use a particular service is actually the subject he/she has claimed to be in the previous identification step.

The service can be for example the release of a digital certificate associated with the user, the remote subscription of a contract, the opening of a bank account, the activation of a SIM card of a mobile phone, the access to a bank account.

The known procedures for identification and authentication of a subject are mainly carried out in real time, i.e. a user is connected (by means of a local electronic device and through a telecommunications network) to a remote human operator (also provided with an electronic device) and executes an online procedure which requires a real-time interaction between the user and the remote operator.

An example of a guided procedure for remote interaction between at least one user and at least one operator is described in the Italian patent application n. 102017000022073 filed on February 27, 2017 in the name of the same Applicant, which is considered to be incorporated for reference in the present description.

US 2009/0086957 A1 discloses a real-time collaboration centre in which a user 125 interacts with a human operator 130 of a call centre.

US 2009/0086957 A1 further discloses that the user 125 can communicate with an automated agent 150 while waiting for the operator 130 to actually be available to communicate with the user 125; during this waiting time in which the user 125 communicates with the automated agent 150, it is possible to retrieve useful information from the user 125 by means of the communication between the user 125 and the automated agent 150, such as for example upload documents, exchange text messages, carry out voice conversations and/or video.

US 2018/227289 discloses a contact center 115 including an orchestration server 133 which performs an identity authentication using a set of rules and a one or more type of authentication factors. Contact server 115 further includes a plurality of Agent stations 127-1, 127-2, 127-3, ... 127-n, which can initiate automatic contact with a customer to augment the authentication data during the authentication process.

US 2016/125884 discloses a method and system using voice biometrics to identify and authenticate a customer more efficiently and accurately, using a voice biometric confidence score based on the voice sample.

The Applicant has observed that the known procedures for identification and authentication of the identity of a subject have the following disadvantages:
- they require the user to wait for a too long time for the availability of a remote operator, since the operator can be engaged with a similar procedure for verifying the identity of another subject: in this case it is necessary to use a large number of remote operators in order to avoid long waiting times for the users, thus increasing the cost of the system;
- the number of procedures which do not conclude correctly the first time is too high, for example due to the incorrect acquisition of documents (for example, insufficient lighting or poor quality of the document to be acquired, the user's photograph of an identity document is too old), thus it is necessary to repeat the complete procedure at least a second time, thus increasing the time during which the human operator is engaged in communications with the user.

Furthermore, the known strong authentication procedures of the identity of a subject are not sufficiently reliable, i.e. do not guarantee with sufficient certainty that the subject to be identified is actually who he/she claims to be.

### SUMMARY OF THE INVENTION

The present invention relates to a computer-implemented method and a system for remote interaction between at least one user and a human operator and between the at least one user and at least one automated agent as defined in the enclosed claims 1 and 8 and from their preferred embodiments described in the dependent claims 2 to 6 and 9.

The Applicant has perceived that the remote interaction method and system in accordance with the present invention can significantly reduce the time spent waiting for the availability of a remote human operator, maintaining at the same time a reduced number of remote human operators, and also reduces the number of procedures for identification and authentication that do not conclude correctly the first time.

Furthermore the Applicant has perceived that the remote interaction method and system in accordance with the present invention can increase the reliability of the strong-type authentication procedures.

It is also an object of the present invention a non-transitory computer-readable storage medium as defined in the enclosed claim 7, said storage medium having a program comprising software code portions adapted to execute the steps of the method according to any of claims 1-6, when said program is run on at least one computer.

### BRIEF DESCRIPTION OF THE DRAWINGS

Additional features and advantages of the invention will become more apparent from the description which follows of a preferred embodiment and the variants thereof, provided by way of example with reference to the appended drawings, in which:

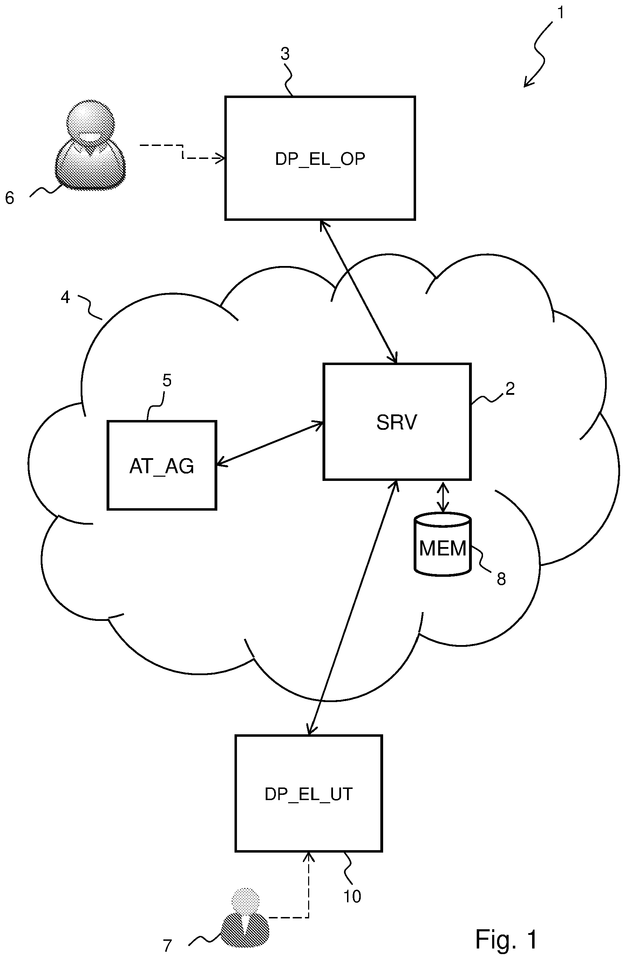

- Figure 1 shows a block diagram of an electronic system for remote interaction between a user's electronic device and an electronic operator device and for remote interaction between the user's electronic device and an automated agent according to the invention.

### DETAILED DESCRIPTION OF THE INVENTION

It should be observed that in the following description, identical or analogous blocks, components or modules are indicated in the figures with the same numerical references, even where they are illustrated in different embodiments of the invention.

With reference to Figure 1, it is shown a block diagram of an electronic system 1 for remote interaction between a user's electronic device and an electronic operator device and for remote interaction between the user's electronic device and an automated agent according to the invention.

The electronic system for remote interaction 1 comprises:
- an electronic operator device 3;
- a user's electronic device 10;
- a telecommunications network 4 interposed between the electronic operator device 3 and the user's electronic device 10;
- a server device 2 positioned in the telecommunications network 4;
- an automated agent 5;
- a non-volatile memory 8 (for example, a database).

It should be noted that for the sake of simplicity that Figure 1 shows a single user's electronic device 10 and a single electronic operator device 3, but more generally it is possible to have two or more users' electronic devices and two or more electronic operator devices.

The telecommunications network 4 has the function of bidirectionally connecting the user's electronic device 10 with the electronic operator device 3 and the user's electronic device 10 with the automated agent 5, by means of a data communication channel and by means of the server device 2.

The telecommunications network 4 can be of the fixed type, mobile or a combination of fixed and mobile.

The server device 2 is an electronic device (for example, a computer or a working station) having the function of bidirectionally connecting the user's electronic device 10 with the electronic operator device 3 and bidirectionally connecting the user's electronic device 10 with the automated agent 5.

Furthermore, the server device 2 comprises a processing unit having the function of controlling the execution of the remote interaction processes on the user's electronic device 10, on the electronic operator device 3 and on the automated agent 5, by means of a client-server type architecture.

The electronic system 1 is such to execute a remote interaction process implemented by means of a plurality of steps (or actions) executed by means of the remote interaction between the user's electronic device 10 and the electronic operator device 3 and by means of the remote interaction between the user's electronic device 10 and the automated agent 5, through the data communication channel and the server device 2.

The term "interaction process" means a procedure comprising a defined sequence of steps (or actions) - i.e. a plurality of predefined steps (or actions) - aimed at delivering a particular good or service for the user 7.

For example, the remote interaction process comprises a procedure for identification and authentication of the identity of the user 7 (in other words, a certification of the identity of the user 7) to deliver one of the following services:
- remote release of a digital certificate that is associated with the user 7;
- remote subscription of a contract by the user 7 with legal value;
- remote opening of a bank account for the user 7;
- remote activation of a SIM card of a mobile telephone of the user 7;
- access to a bank account held by the user 7 by means of a bank's website.

In particular, the electronic system 1 is such to execute the remote interaction process of hybrid type according to twophases:
- a first automatic phase, wherein the user's electronic device 10 interacts with the automated agent 5 to perform a first plurality of steps (or actions) of the interaction process, in order to collect all the information and documents that do not require the presence of the human operator 6;
- a second phase wherein the user's electronic device 10 interacts with the human operator 6 to perform a subsequent second plurality of steps (or actions) of the interaction process, in order to carry out all the steps (or actions) that require a human presence, or in case wherein the presence of human beings is necessary because for example it is required by law or for technical support reasons.

By means of the first phase it is possible to perform all the steps (actions) that do not require the presence of the human operator 6, thus avoiding engaging the operator 6 in automated actions; therefore during the first phase the operator 6 can interact with another user other than the user 10 and thus it is possible to manage for example a high number of video identifications with a lower number of human operators.

For example, the interaction process comprises a verification of the identity of the user 7 (i.e., verification that the user 7 is really who he/she declares to be) and in the first automatic phase information representative of (or associated with) the identity of the user 7 is automatically acquired by means of actions that can be performed in an automatic manner, such as the following:
- acquisition of documents of the user 7 (for example, identity card of the user 7);
- verification of the acquired documents;
- comparison between the photograph of the face of the user 7 of one of his identity documents and the real-time image of the face of the user acquired by means of a camera of the user's electronic device 10, by means of the combination of algorithms of machine learning and biometrics;
- verification that the user 7 is a living person (and not an image on a photograph), by means of a biometric facial recognition of the user 7.

Furthermore, in the first phase it is possible to execute the same automated action more than once, in the case wherein a step (action) of the remote interaction procedure between the user 7 and the automated agent 5 has not been executed correctly.

For example, the remote interaction procedure comprises the remote certification of the identity of a subject and the step (action) executed in the first phase is the presentation of a document (such as an identity card) of the subject in front of a camera that it is supposed to occur in insufficient lighting conditions: in this case the automated agent 5 verifies that the quality of the acquired image of the document is inadequate and it does not proceed to the subsequent step (action) of the certification procedure of the identity of the user 7, but the automated agent 5 asks the user 7 to repeat the display of his identity document in front of the camera of the user's electronic device 10 in better lighting conditions.

Therefore in the first phase the automatic verifications are executed to determine whether it is or is not possible to continue with the next step (action) of the remote interaction procedure.

In the second phase, instead, the remaining steps (or actions) of the remote interaction process that require the presence of a human are executed, wherein said steps of the second phase can be one or more than one.

For example, the remote interaction procedure comprises the certification of the identity of a subject and in the second phase, the necessary steps (actions) are executed to validate the identity of the user 7, such as for example:
- control and approval of the entire documentation associated with the user 7 which has been acquired in the first automated phase;
- "de visu" verification of the identity document;
- "de visu" recognition of the user 7;
- technical support.

Therefore in the example of certification of the identity of a subject, in the second phase the human operator 8 receives the documents already verified in an optimum manner by means of the automated agent 5 and thus the operator 8 has only to check the documents in a few seconds and execute a real time video connection with the user 7.

The electronic operator device 3 is controlled by a human operator 6 and it is such to run a software program (hereinafter indicated as "operator software application") that allows interacting with the user's electronic device 10, in order to execute the second phase of the remote interaction process between the user's electronic device 10 and the electronic operator device 3.

The electronic operator device 3 comprises a processing unit, a transceiver, a graphic user interface (for example, an LCD or LED screen), a camera and a headset.

The electronic operator device 3 can be for example one of the following devices:
- a desktop personal computer;
- a laptop personal computer;
- a smartphone;
- a tablet.

Similarly, the user's electronic device 10 is controlled by a user 7 and it is such to run a software program that allows to:
- interact with the automated agent 5 through the data communication channel, in order to execute the first phase of the remote interaction process;
- interact with the electronic operator device 3 through the data communication channel, in order to execute the second phase of the remote interaction process.

The user's electronic device 10 is such to exchange text messages with the automated agent 5 in the first phase and with the electronic operator device 3 in the second phase by means of respective chats, wherein the text messages are carried through the telecommunications network 4 and server device 2.

Alternatively or in combination with the chat, the user's electronic device 10 is such to exchange audio messages with the automated agent 5 in the first phase and with the electronic operator device 3 in the second phase by means of respective audio chats, wherein the text and/or audio messages are carried through the telecommunications network 4 and the server device 2.

Alternatively or in combination with the chat, the user's electronic device 10 is such to exchange audio-video messages with the automated agent 5 in the first phase and with the electronic operator device 3 in the second phase by means of respective audio-video chats, wherein the text and/or audio-video messages are carried through the telecommunications network 4 and the server device 2.

The user's electronic device 10 comprises a processing unit, a transceiver, a graphic user interface (for example, an LCD or LED screen), a camera and a headset.

The user's electronic device 10 can be for example one of the following devices:
- a desktop personal computer;
- a laptop personal computer;
- a smartphone;
- a tablet.

The automated agent 5 is a software program running on the server 2 and it has the function of interacting with the user's electronic device 10 of the user 7, in order to execute the first automated step of the remote interaction process.

The automated agent 5 is such to execute all the steps of the remote interaction process that can be performed in an automatic manner, i.e. without requiring the intervention of the human operator 6, as described above.

Advantageously, the software program that implements the automated agent 5 runs artificial intelligence algorithms that are able to emulate the behaviour of a human being.

According to a preferred embodiment, the processing unit of the server device 2 is configured to calculate a digital identity reference profile associated with the user 7, as a function of the personal and/or biometric information of the user 10 collected during the first automated phase of the remote interaction process.

The term "identify reference profile" of the user means a collection of personal information identifying the user 7, such as for example an encoded text file that comprises one or more of the following:
- name and surname;
- date and place of birth;
- residence address;
- fiscal code;
- telephone number;
- email address;
- biometric parameters of the face of the user 7, such as for example the interpupillary distance, distances between particular points of the face (nose, the outline of the face, outline of the eyebrows).

In this case the memory 8 is configured to permanently store the digital identity reference profile of the user 10.

In other words, at the end of the first automatic phase the digital identity reference profile of the user 10 is calculated, which can advantageously be used subsequently, both in the second phase of the remote interaction process, and in the case of procedures for verifying the identity of the user 7 using a strong authentication, and for other applications outside of the interaction process considered.

Advantageously, the biometric parameters of the digital identity reference profile are generated by means of the acquisition of a plurality of biometric parameters of the face of the subject 7 obtained by means of the movement of the head of the subject 7, as disclosed in the Italian patent application n. 102017000145528 filed on December 18, 2017 in the name of the same Applicant, which is included for reference in the present description.

Advantageously, the digital identity reference profile is of an anonymous type.

For example, the remote interaction process comprises a verification and authentication procedure of the identity of the user 7: in this case in the first automated step (by means of the communication between the user's electronic device 7 and the automated agent 5 through the network 4 and the server 2) the personal information of the user 7 is acquired, such as name, surname, date and place of birth, residence address, fiscal code and a photograph.

The processing unit of the server device 2 processes the personal information acquired from the user 7 and generates, as a function therefrom, an anonymous hash code, i.e. by means of a suitable function a pseudorandom code is generated that provides in output the same result in the case of a same input.

According to a preferred embodiment, the digital identity reference profile of the user 10 is stored into a blockchain.

According to a first variant of the invention, the digital identity reference profile of the user 10 (calculated at the end of the first phase and stored permanently into the memory 8) is used to increase the security level in the procedures for verifying the identity of the user 7 in the case of use of a strong authentication, i.e. which use a combination of at least two authentication factors of a different type to increase the security level with which the subject is identified.

Therefore in case wherein the user 7 requests a good or service in telematics mode, it is possible to reuse the digital identity reference profile of the user 10 previously calculated and stored into the memory 8. In this case the user 10 carries out for the second time an identity verification procedure by means of the collection of personal and/or biometric-type data and a new digital identity profile of the user 7 is calculated in real time (hereinafter indicated as "sample profile of digital identity", to distinguish it from the digital identity reference profile), which is compared (before or after another authentication factor) with repect to the digital identity reference profile stored into the memory 8:
- in case wherein the comparison between the sample profile of digital identity of the user 7 (calculated in real time) and the digital identity reference profile of the user 7 (previously stored) is positive, this means that the authentication factor has been positive and thus it continues with the comparison of the other authentication factor (if subsequent to that of the digital identity profile) or the verification of the identity of the user 7 concludes successfully (in case wherein the factor of the digital identity profile is the last);
- in case wherein the comparison between the sample profile of digital identity (calculated in real time) and the reference identity profile (previously stored) is negative, this means that the authentication of the user 7 has not been successful (i.e. the user 7 is not really who declares to be) and thus the verification of the identity of the user 7 terminates unsuccessfully.

For example, the digital identity reference profile (previously stored) is used to allow or deny access to the user 7 to a bank account, in case wherein it is used a strong authentication composed of a verification of the credentials of the user 7 followed by the verification of the digital identity profile of the user 7.

In this example the user 7 opens the bank's web page with a browser, enters his credentials with a positive outcome and then it is executed (by means of the processing unit in the server device 2) the comparison between the sample profile of digital identity of the user 7 (calculated in real time) and the digital identity reference profile of the user 7 (previously stored), in order to allow or deny the user 7 access to the requested bank account.

The above considerations relating to the digital identity reference profile of the user 7 are applicable in a similar way to the sample profile of digital identity of the user 7, i.e. the term "sample profile of identity" of the user means a collection of personal information identifying the user 7, such as for example one or more of the following:
- name and surname;
- date and place of birth;
- residence address;
- fiscal code;
- telephone number;
- email address;
- biometric parameters of the face of the user 7, such as for example the interpupillary distance, distances between particular points of the face (nose, the outline of the face, outline of the eyebrows).

Advantageously, the biometric parameters of the sample profile of digital identity are generated by means of the acquisition of a plurality of biometric parameters of the face of the subject 7 obtained by means of the movement of the head of the subject 7, as disclosed in the Italian patent application n. 102017000145528 filed on December 18, 2017 in the name of the same Applicant, which is included for reference in the present description.

According to a second variant of the invention, the digital identity reference profile of the user 10 (calculated at the end of the first phase and permanently stored into the memory 8) is used for access to third-party applications that require an acquisition of data identifying the identity of the user 10, for example by banks, telephone companies and insurance companies.

Therefore in the case in which the user 7 tries to log on for the first time to a software application by means of the user's electronic device 10 (after the user 7 has already carried out the remote interaction process a first time in order to generate his digital identity reference profile as illustrated above, in particular only the first automated phase), it is possible to reuse the digital identity reference profile of the user 7 (previously calculated and stored into the memory 8) to quickly provide data identifying the identity of the user 7 (i.e. sensitive and/or biometric data of the user 7) without again requesting the insertion of all his data (for example by means of a simple "click" with the mouse), thus creating a "digital passport" of the user 7.

## Claims

1. Computer-implemented method for remote interaction between a user (7) and an automated agent (5) and for remote interaction between the user and a human operator (6), the method comprising:
a) bidirectionally connecting a user's electronic device (10) to the automated agent (5) by means of a data communication channel through a telecommunications network (4) comprising a server device (2);
b) configuring in real time the user's electronic device to execute a step of an interaction process, wherein the interaction process is partially implemented by means of a first plurality of steps executed by means of the interaction between the user's electronic device (10) and the automated agent (5) through the data communication channel of the telecommunications network;
c) configuring in real time the automated agent (5) to execute said step of the interaction process;
d) executing said step of the first plurality by means of exchanging, between the user's electronic device and the automated agent, text messages of an online chat and/or by means of exchanging audio/audio-video messages of an audio/audio-video online chat, wherein said text and/or audio/audio-video messages are carried through said telecommunications network, said step comprising acquiring information representative of the identity of a user (7) of the user's electronic device (10);
e) verifying, by means of the automated agent (5), whether the step of the first plurality has been executed correctly by means of the user's electronic device;
f) in case of positive verification, approving by means of the automated agent (5) the step of the first plurality and repeating c), d), e), f) for a further step of the first plurality of steps;
g) in case of negative verification, repeating the execution of the step of the first plurality of steps of the interaction process and returning to e), till completing the execution of the first plurality of steps with positive verifications;
h) generating at the server device (2), as a function of the acquired information representative of the user's identity, a reference profile of digital identity associated with the user (7) of the user's electronic device (10);
i) storing, into a non-volatile memory (8) of the server device (2), said user's digital identity reference profile;
j) bidirectionally connecting the user's electronic device (10) to an electronic operator device (3) by means of a data communication channel through the telecommunications network;
k) configuring in real time the user's electronic device to execute a step of the interaction process, wherein the interaction process is further implemented by means of a second plurality of steps subsequent to the first plurality of steps and executed by means of the interaction between the user's electronic device (10) and the electronic operator device (3) through the data communication channel;
l) configuring in real time the electronic operator device (3) to execute said step of the interaction process;
m) executing said step of the second plurality by means of exchanging, between the user's electronic device and the electronic operator device, of text messages of an online chat and/or by means of exchanging audio/audio-video messages of an audio/audio-video online chat, wherein the text and/or audio/audio-video messages are carried through said telecommunications network;
n) analyzing, by means of the electronic operator device (3), at least a part of the user's digital identity reference profile;
o) in case of a positive analysis, approving by means of the electronic operator device (3) the step of the second plurality and repeating I), m), n), o) for a further step of the second plurality of steps;
p) in case of a negative analysis, repeating the execution of the step of the second plurality of steps of the interaction process and returning to n), till completing the execution of the second plurality of steps with positive verifications,
wherein the digital identity reference profile is a set of personal information identifying the user, in particular comprising name and surname, date and place of birth, residence address, fiscal code, telephone number, email address, biometric parameters of the face of the user,
and wherein h) comprises generating the user's digital identity reference profile comprising an encoded text file of anonymous type.

2. Method for remote interaction according to claim 1, wherein the digital identity reference profile is a hash code.

3. Method for remote interaction according to claims 1 or 2, comprising a procedure for verifying the identity of the user (7) by means of a strong authentication comprising at least two factors, wherein one of the two factors comprises a further interaction process between the user's electronic device and the electronic operator device and/or the automated agent, the method comprising:
a1) executing said step of the further interaction process by means of exchanging, between the user's electronic device and the electronic operator device and/or the automated agent, of text messages of an online chat and/or by means of exchanging audio/audio-video messages of an audio/audio-video online chat, wherein the text and/or audio/audio-video messages are carried through said telecommunications network, said step comprising acquiring information representative of the identity of the user (7) of the user's electronic device (10);
b1) generating at the server device (2), as a function of the acquired information representative of the user's identity, a sample profile of digital identity associated with the user (7) of the user's electronic device (10);
c1) comparing the sample profile of digital identity associated with the user with respect to the digital identity reference profile;
d1) in case of a negative comparison, generating a message representative of a negative verification of the user's identity of the user's electronic device;
d2) in case of a positive comparison, generating a message representative of a positive verification of the user's identity of the user's electronic device.

4. Method for remote interaction according to any of the previous claims, wherein the interaction process is a procedure for identification and authentication of the user's identity,
wherein the first plurality of steps comprises at least one of the following steps:
- acquiring an identity document of the user;
- comparing a photo of the face of the user of his identity document with respect to a real time image of the user's face acquired by means of a camera of the user's electronic device;
- biometric recognition of the user's face by means of a plurality of acquired images of the user's face, in order to verify whether the user is a living person.

5. Method for remote interaction according to any of the previous claims, wherein the interaction process of the first and second plurality of steps is one of the following:
- procedure for identification and authentication of the identity of the remote user for the release of a digital certificate associated with the remote user;
- procedure for identification and authentication of the identity of the remote user for the remote subscription of a contract for the remote user;
- procedure for identification and authentication of the identity of the remote user for performing a remote opening of a bank account for the remote user;
- procedure for identification and authentication of the identity of the remote user for performing the remote activation of a SIM card of a user's smartphone;
- procedure for identification and authentication of the identity of the remote user for performing the access to a user's bank account by means of a bank's website.

6. Method for remote interaction according to any of the previous claims, further comprising:
k1) configuring in real time a further user's electronic device to execute a step of a further interaction process during at least a part of the time interval in which the user's electronic device is configured to exchange, with the automated agent, text messages of an online chat and/or audio/audio-video messages of an audio/audio-video online chat, wherein the further interaction process is implemented by means of a further plurality of steps executed by means of the interaction between the user's electronic device and the electronic operator device (3) through the data communication channel;
11) configuring in real time the electronic operator device (3) to execute said step of the further interaction process;
m1) executing said step of the further plurality by means of exchanging, between the further user's electronic device and the electronic operator device, of text messages of an online chat and/or by means of exchanging audio/audio-video messages of an audio/audio-video online chat, wherein the text and/or audio/audio-video messages are carried through said telecommunications network;
n1) analyzing, by means of the further electronic operator device (3), at least a part of a further digital identity reference profile of a further user of the further user's electronic device;
o1) in case of a positive analysis, approving by means of the electronic operator device (3) the step of the further plurality and repeating 11), m1), n1), o1) for a further step of the further plurality of steps;
p1) in case of a negative analysis, repeating the execution of the step of the further plurality of steps of the further interaction process and returning to n1), till completing the execution of the further plurality of steps with positive verifications.

7. Non-transitory computer-readable storage medium, said storage medium comprising software code portions adapted to perform the steps of the method according to any of the previous claims, when said program is run on a computer.

8. Electronic system (1) for remote interaction between a user (7) and an automated agent (5) and for remote interaction between the user and a human operator (6), the system comprising:
- a user's electronic device (10) controlled by a remote user (7);
- an electronic operator device (3) controlled by an operator (6);
- an automated agent (5);
- a telecommunications network (4) configured to bidirectionally connect the user's electronic device to the electronic operator device by means of a data communication channel;
- a server device (2) within the telecommunications network;
- a non-volatile memory (8) configured to store a digital identity reference profile associated with the user (7) of the user's electronic device (10), wherein the digital identity reference profile is a set of personal information identifying the user, in particular comprising name and surname, date and place of birth, residence address, fiscal code, telephone number, email address, biometric parameters of the face of the user;
wherein the user's electronic device (10) is configured to:
• configure itself in real time to execute a step of an interaction process, wherein the interaction process is partially implemented by means of a first plurality of steps executed by means of the interaction between the user's electronic device (10) and the automated agent (5) through the data communication channel;
• execute said step of the first plurality by means of exchanging with the automated agent of text messages of an online chat and/or by means of exchanging audio/audio-video messages of an audio/audio-video online chat, wherein said text and/or audio/audio-video messages are carried through said telecommunications network, said step comprising acquiring information representative of the identity of the user (7) of the user's electronic device (10);
• in case of positive verification of the correct execution of the step of the first plurality of steps, repeat said configuration, execution, verification for a further step of the first plurality of steps;
• in case of negative verification of the correct execution of the step of the first plurality of steps, repeat said execution of the step of the first plurality and said verification, till completing the execution of the first plurality of steps with positive verifications;
• configure itself in real time to execute a step of an interaction process, wherein the interaction process is further implemented by means of a second plurality of steps subsequent to the first plurality of steps and executed by means of the interaction between the user's electronic device (10) and the electronic operator device (3) through the data communication channel;
• execute said step of the second plurality by means of exchanging with the electronic operator device of text messages of an online chat and/or by means of exchanging audio/audio-video messages of an audio/audio-video online chat, wherein the text and/or audio/audio-video messages are carried through said telecommunications network;
• in case of a positive analysis of at least part of the user's digital identity reference profile, repeat said configuration, execution of the step of the second plurality and analysis for a further step of the second plurality of steps;
• in case of a negative analysis, repeat the execution of the step of the second plurality of steps of the interaction process and said analysis of a part of the user's digital identity reference profile, till completing the execution of the second plurality of steps with positive verifications; wherein the automated agent is configured to:
• configure itself in real time to execute the first plurality of steps;
• verify whether the step of the first plurality has been executed correctly by means of the user's electronic device;
• in case of positive verification, approve the step of the first plurality of steps and repeat said configuration, execution of the step of the first plurality and verification for a further step of the first plurality of steps; wherein the electronic operator device is configured to:
• configure itself in real time to execute the second plurality of steps;
• execute said step of the second plurality by means of exchanging text messages of an online chat and/or by means of exchanging audio/audio-video messages of an audio/audio-video online chat, wherein the text and/or audio/audio-video messages are carried through said telecommunications network;
• analyze at least a part of the user's digital identity reference profile;
• in case of a positive analysis, approve by means of the electronic operator device (3) the step of the second plurality and repeat said configuration, execution of the step of the second plurality and analysis for a further step of the second plurality of steps;
• in case of a negative analysis, repeat the execution of the step of the second plurality of steps of the interaction process and repeat said analysis, till completing the execution of the second plurality of steps with positive verifications;
and wherein the server device (2) is configured to:
• generate, as a function of the acquired information representative of the user's identity, a reference profile of digital identity associated with the user (7) of the user's electronic device (10), wherein the user's digital identity reference profile comprises an encoded text file of anonymous type;
• store, in the memory (8), said user's digital identity reference profile; and wherein the memory (8) is configured to store said user's digital identity reference profile.

9. Electronic system according to claim 8, comprising a further user's electronic device of a further user,
wherein the electronic operator device is configured to exchange, with the further user's electronic device, text messages of an online chat and/or audio/audio-video messages of an audio/audio-video online chat, during at least a part of the time interval in which the user's electronic device is configured to exchange, with the automated agent, text messages of an online chat and/or audio/audio-video messages of an audio/audio-video online chat.

## Patentansprüche

1. Computerimplementiertes Verfahren zur Ferninteraktion zwischen einem Benutzer (7) und einem automatisierten Agenten (5) und zur Ferninteraktion zwischen dem Benutzer und einem menschlichen Bediener (6), wobei das Verfahren Folgendes umfasst:
a) bidirektionales Verbinden einer elektronischen Benutzervorrichtung (10) mit dem automatisierten Agenten (5) mittels eines Datenkommunikationskanals über ein Telekommunikationsnetzwerk (4), das eine Servervorrichtung (2) umfasst;
b) Konfigurieren der elektronischen Benutzervorrichtung in Echtzeit, um einen Schritt eines Interaktionsprozesses auszuführen, wobei der Interaktionsprozess teilweise mittels einer ersten Vielzahl von Schritten implementiert wird, die mittels der Interaktion zwischen der elektronischen Benutzervorrichtung (10) und dem automatisierten Agenten (5) über den Datenkommunikationskanal des Telekommunikationsnetzwerks ausgeführt werden;
c) Konfigurieren des automatisierten Agenten (5) in Echtzeit, um den Schritt des Interaktionsprozesses auszuführen;
d) Ausführen des Schritts der ersten Vielzahl durch Austauschen von Textnachrichten eines Online-Chats zwischen der elektronischen Benutzervorrichtung und dem automatisierten Agenten und/oder durch Austauschen von Audio-/Audio-Video-Nachrichten eines Audio-/Audio-Video-Online-Chats, wobei der Text und/oder die Audio-/Audio-Video-Nachrichten über das Telekommunikationsnetzwerk übertragen werden, wobei der Schritt das Erfassen von Informationen umfasst, die für die Identität eines Benutzers (7) der elektronischen Benutzervorrichtung (10) repräsentativ sind;
e) Verifizieren, mittels des automatisierten Agenten (5), ob der Schritt der ersten Vielzahl korrekt ausgeführt worden ist, mittels der elektronischen Benutzervorrichtung;
f) bei positiver Verifizierung, Genehmigen des Schritts der ersten Vielzahl mittels des automatisierten Agenten (5) und Wiederholen von c), d), e), f) für einen weiteren Schritt der ersten Vielzahl von Schritten;
g) bei negativer Verifizierung, Wiederholen der Ausführung des Schritts der ersten Vielzahl von Schritten des Interaktionsprozesses und Zurückkehren zu e), bis die Ausführung der ersten Vielzahl von Schritten mit positiven Verifizierungen abgeschlossen ist;
h) Generieren eines Referenzprofils digitaler Identität, die dem Benutzer (7) der elektronischen Benutzervorrichtung (10) zugeordnet ist, an der Servervorrichtung (2) als Funktion von den erfassten Informationen, die für die Identität des Benutzers repräsentativ sind;
i) Speichern des digitalen Identitätsreferenzprofils des Benutzers in einem nichtflüchtigen Speicher (8) der Servervorrichtung (2);
j) bidirektionales Verbinden der elektronischen Benutzervorrichtung (10) mit einer elektronischen Bedienervorrichtung (3) mittels eines Datenkommunikationskanals über das Telekommunikationsnetz;
k) Konfigurieren der elektronischen Benutzervorrichtung in Echtzeit, um einen Schritt des Interaktionsprozesses auszuführen, wobei der Interaktionsprozess ferner mittels einer zweiten Vielzahl von Schritten im Anschluss an die erste Vielzahl von Schritten implementiert und mittels der Interaktion zwischen der elektronischen Benutzervorrichtung (10) und der elektronischen Bedienervorrichtung (3) über den Datenkommunikationskanal ausgeführt wird;
l) Konfigurieren der elektronischen Bedienervorrichtung (3) in Echtzeit, um den Schritt des Interaktionsprozesses auszuführen;
m) Ausführen des Schritts der zweiten Vielzahl durch Austauschen von Textnachrichten eines Online-Chats zwischen der elektronischen Benutzervorrichtung und der elektronischen Bedienervorrichtung und/oder durch Austauschen von Audio-/Audio-Video-Nachrichten eines Audio-/Audio-Video-Online-Chats, wobei die Text- und/oder Audio-/Audio-Video-Nachrichten über das Telekommunikationsnetzwerk übertragen werden;
n) Analysieren, mittels der elektronischen Bedienervorrichtung (3), zumindest eines Teils des digitalen Identitätsreferenzprofils des Benutzers;
o) bei einer positiven Analyse, Genehmigen des Schritts der zweiten Vielzahl mittels der elektronischen Bedienervorrichtung (3) und Wiederholen von 1), m), n), o) für einen weiteren Schritt der zweiten Vielzahl von Schritten;
p) bei einer negativen Analyse, Wiederholen der Ausführung des Schritts der zweiten Vielzahl von Schritten des Interaktionsprozesses und Zurückkehren zu n), bis die Ausführung der zweiten Vielzahl von Schritten mit positiven Verifizierungen abgeschlossen ist,
wobei das digitale Identitätsreferenzprofil ein Satz personenbezogener Informationen ist, die den Benutzer identifizieren, insbesondere umfassend Vor- und Nachname, Geburtsdatum und -ort, Wohnadresse, Steuernummer, Telefonnummer, E-Mail-Adresse, biometrische Parameter des Gesichts des Benutzers,
und wobei h) das Generieren des digitalen Identitätsreferenzprofils des Benutzers umfasst, das eine codierte Textdatei von anonymer Art umfasst.

2. Verfahren zur Ferninteraktion nach Anspruch 1, wobei das digitale Identitätsreferenzprofil ein Hash-Code ist.

3. Verfahren zur Ferninteraktion nach Anspruch 1 oder 2, umfassend eine Prozedur zum Verifizieren der Identität des Benutzers (7) mittels einer starken Authentifizierung, die mindestens zwei Faktoren umfasst, wobei einer der zwei Faktoren einen weiteren Interaktionsprozess zwischen der elektronischen Benutzervorrichtung und der elektronischen Bedienervorrichtung und/oder dem automatisierten Agenten umfasst, wobei das Verfahren Folgendes umfasst:
a1) Ausführen des Schritts des weiteren Interaktionsprozesses durch Austauschen von Textnachrichten eines Online-Chats zwischen der elektronischen Benutzervorrichtung und der elektronischen Bedienervorrichtung und/oder dem automatisierten Agenten und/oder durch Austauschen von Audio-/Audio-Video-Nachrichten eines Audio-/Audio-Video-Online-Chats, wobei die Text- und/oder Audio-/Audio-Video-Nachrichten über das Telekommunikationsnetzwerk übertragen werden, wobei der Schritt das Erfassen von Informationen umfasst, die für die Identität des Benutzers (7) der elektronischen Benutzervorrichtung (10) repräsentativ sind;
b1) Generieren eines Musterprofils der digitalen Identität, die dem Benutzer (7) der elektronischen Benutzervorrichtung (10) zugeordnet ist, an der Servervorrichtung (2) als Funktion von den erfassten Informationen, die für die Identität des Benutzers repräsentativ sind;
c1) Vergleichen des Musterprofils der digitalen Identität, die dem Benutzer zugeordnet ist, mit dem digitalen Identitätsreferenzprofil;
d1) bei einem negativen Vergleich, Generieren einer Nachricht, die für eine negative Verifizierung der Identität des Benutzers der elektronischen Benutzervorrichtung repräsentativ ist;
d2) bei einem positiven Vergleich, Generieren einer Nachricht, die für eine positive Verifizierung der Identität des Benutzers der elektronischen Benutzervorrichtung repräsentativ ist.

4. Verfahren zur Ferninteraktion nach einem der vorhergehenden Ansprüche, wobei der Interaktionsprozess eine Prozedur zur Identifizierung und Authentifizierung der Identität des Benutzers ist,
wobei die erste Vielzahl von Schritten mindestens einen der folgenden Schritte umfasst:
- Erfassen eines Ausweisdokuments des Benutzers;
- Vergleichen eines Fotos des Gesichts des Benutzers seines Ausweisdokuments mit einem Echtzeitbild des Gesichts des Benutzers, das mittels einer Kamera der elektronischen Benutzervorrichtung erfasst wurde;
- biometrische Erkennung des Gesichts des Benutzers mittels einer Vielzahl von erfassten Bildern des Gesichts des Benutzers, um zu verifizieren, ob es sich bei dem Benutzer um eine lebende Person handelt.

5. Verfahren zur Ferninteraktion nach einem der vorhergehenden Ansprüche, wobei der Interaktionsprozess der ersten und zweiten Vielzahl von Schritten einer der folgenden ist:
- Prozedur zur Identifizierung und Authentifizierung der Identität des Fernbenutzers für die Freigabe eines digitalen Zertifikats, das dem Fernbenutzer zugeordnet ist;
- Prozedur zur Identifizierung und Authentifizierung der Identität des Fernbenutzers für das Fernabonnement eines Vertrags für den Fernbenutzer;
- Prozedur zur Identifizierung und Authentifizierung der Identität des Fernbenutzers zur Durchführung einer entfernten Eröffnung eines Bankkontos für den Fernbenutzer;
- Prozedur zur Identifizierung und Authentifizierung der Identität des Fernbenutzers zur Durchführung der Fernaktivierung einer SIM-Karte des Smartphones eines Benutzers;
- Prozedur zur Identifizierung und Authentifizierung der Identität des Fernbenutzers zur Durchführung des Zugriffs auf das Bankkonto eines Benutzers über die Website einer Bank.

6. Verfahren zur Ferninteraktion nach einem der vorhergehenden Ansprüche, ferner umfassend:
k1) Konfigurieren einer weiteren elektronischen Benutzervorrichtung in Echtzeit, um einen Schritt eines weiteren Interaktionsprozesses während mindestens eines Teils des Zeitintervalls auszuführen, in dem die elektronische Benutzervorrichtung konfiguriert ist, um mit dem automatisierten Agenten Textnachrichten eines Online-Chats und/oder Audio-/Audio-Video-Nachrichten eines Audio-/Audio-Video-Online-Chats auszutauschen, wobei der weitere Interaktionsprozess mittels einer weiteren Vielzahl von Schritten implementiert wird, die mittels der Interaktion zwischen der elektronischen Benutzervorrichtung und der elektronischen Bedienervorrichtung (3) über den Datenkommunikationskanal ausgeführt werden;
11) Konfigurieren der elektronischen Bedienervorrichtung (3) in Echtzeit, um den Schritt des weiteren Interaktionsprozesses auszuführen;
m1) Ausführen des Schritts der weiteren Vielzahl durch Austauschen von Textnachrichten eines Online-Chats zwischen der weiteren elektronischen Benutzervorrichtung und der elektronischen Bedienervorrichtung und/oder durch Austauschen von Audio-/Audio-Video-Nachrichten eines Audio-/Audio-Video-Online-Chats, wobei die Text- und/oder Audio-/Audio-Video-Nachrichten über das Telekommunikationsnetzwerk übertragen werden;
n1) Analysieren, mittels der weiteren elektronischen Bedienervorrichtung (3), zumindest eines Teils eines weiteren digitalen Identitätsreferenzprofils eines weiteren Benutzers der weiteren elektronischen Benutzervorrichtung;
o1) bei einer positiven Analyse, Genehmigen des Schritts der weiteren Vielzahl mittels der elektronischen Bedienervorrichtung (3) und Wiederholen von 11), m1), n1), o1) für einen weiteren Schritt der weiteren Vielzahl von Schritten;
p1) bei einer negativen Analyse, Wiederholen der Ausführung des Schritts der weiteren Vielzahl von Schritten des weiteren Interaktionsprozesses und Zurückkehren zu n1), bis die Ausführung der weiteren Vielzahl von Schritten mit positiven Verifizierungen abgeschlossen ist.

7. Nichtflüchtiges computerlesbares Speichermedium, wobei das Speichermedium Softwarecodeabschnitte umfasst, die dazu ausgelegt sind, die Schritte des Verfahrens nach einem der vorhergehenden Ansprüche durchzuführen, wenn das Programm auf einem Computer ausgeführt wird.

8. Elektronisches System (1) zur Ferninteraktion zwischen einem Benutzer (7) und einem automatisierten Agenten (5) und zur Ferninteraktion zwischen dem Benutzer und einem menschlichen Bediener (6), wobei das System Folgendes umfasst:
- eine elektronische Benutzervorrichtung (10), die von einem Fernbenutzer (7) gesteuert wird;
- eine elektronische Bedienervorrichtung (3), die von einem Bediener (6) gesteuert wird;
- einen automatisierten Agenten (5);
- ein Telekommunikationsnetzwerk (4), das konfiguriert ist, um die elektronische Benutzervorrichtung mittels eines Datenkommunikationskanals bidirektional mit der elektronischen Bedienervorrichtung zu verbinden;
- eine Servervorrichtung (2) innerhalb des Telekommunikationsnetzwerks;
- einen nichtflüchtigen Speicher (8), der konfiguriert ist, um ein digitales Identitätsreferenzprofil zu speichern, das dem Benutzer (7) der elektronischen Benutzervorrichtung (10) zugeordnet ist, wobei das digitale Identitätsreferenzprofil ein Satz personenbezogener Informationen ist, die den Benutzer identifizieren, insbesondere umfassend Vor- und Nachname, Geburtsdatum und -ort, Wohnadresse, Steuernummer, Telefonnummer, E-Mail-Adresse, biometrische Parameter des Gesichts des Benutzers;
wobei die elektronische Benutzervorrichtung (10) konfiguriert ist, um:
• sich selbst in Echtzeit zu konfigurieren, um einen Schritt eines Interaktionsprozesses auszuführen, wobei der Interaktionsprozess teilweise mittels einer ersten Vielzahl von Schritten implementiert wird, die mittels der Interaktion zwischen der elektronischen Benutzervorrichtung (10) und dem automatisierten Agenten (5) über den Datenkommunikationskanal ausgeführt werden;
• den Schritt der ersten Vielzahl durch Austauschen von Textnachrichten eines Online-Chats mit dem automatisierten Agenten und/oder durch Austauschen von Audio-/Audio-Video-Nachrichten eines Audio-/Audio-Video-Online-Chats auszuführen, wobei die Text- und/oder Audio-/Audio-Video-Nachrichten über das Telekommunikationsnetzwerk übertragen werden, wobei der Schritt das Erfassen von Informationen umfasst, die für die Identität des Benutzers (7) der elektronischen Benutzervorrichtung (10) repräsentativ sind;
• bei positiver Verifizierung der korrekten Ausführung des Schritts der ersten Vielzahl von Schritten, die Konfiguration, Ausführung, Verifizierung für einen weiteren Schritt der ersten Vielzahl von Schritten zu wiederholen;
• bei negativer Verifizierung der korrekten Ausführung des Schritts der ersten Vielzahl von Schritten die Ausführung des Schritts der ersten Vielzahl und die Verifizierung zu wiederholen, bis die Ausführung der ersten Vielzahl von Schritten mit positiven Verifizierungen abgeschlossen ist;
• sich selbst in Echtzeit zu konfigurieren, um einen Schritt eines Interaktionsprozesses auszuführen, wobei der Interaktionsprozess ferner mittels einer zweiten Vielzahl von Schritten im Anschluss an die erste Vielzahl von Schritten implementiert und mittels der Interaktion zwischen der elektronischen Benutzervorrichtung (10) und der elektronischen Bedienervorrichtung (3) über den Datenkommunikationskanal ausgeführt wird;
• den Schritt der zweiten Vielzahl durch Austauschen von Textnachrichten eines Online-Chats mit der elektronischen Bedienervorrichtung und/oder durch Austauschen von Audio-/Audio-Video-Nachrichten eines Audio-/Audio-Video-Online-Chats auszuführen, wobei die Text- und/oder Audio-/Audio-Video-Nachrichten über das Telekommunikationsnetzwerk übertragen werden;
• bei einer positiven Analyse zumindest eines Teils des digitalen Identitätsreferenzprofils des Benutzers, die Konfiguration, die Ausführung des Schritts der zweiten Vielzahl und die Analyse für einen weiteren Schritt der zweiten Vielzahl von Schritten zu wiederholen;
• bei einer negativen Analyse, die Ausführung des Schritts der zweiten Vielzahl von Schritten des Interaktionsprozesses und die Analyse eines Teils des digitalen Identitätsreferenzprofils des Benutzers zu wiederholen, bis die Ausführung der zweiten Vielzahl von Schritten mit positiven Verifizierungen abgeschlossen ist;
wobei der automatisierte Agent konfiguriert ist, um:
• sich selbst in Echtzeit zu konfigurieren, um die erste Vielzahl von Schritten auszuführen;
• zu verifizieren, ob der Schritt der ersten Vielzahl mittels der elektronischen Benutzervorrichtung korrekt ausgeführt worden ist;
• bei positiver Verifizierung, den Schritt der ersten Vielzahl von Schritten zu genehmigen und die Konfiguration, Ausführung des Schritts der ersten Vielzahl und die Verifizierung für einen weiteren Schritt der ersten Vielzahl von Schritten zu wiederholen; wobei die elektronische Bedienervorrichtung konfiguriert ist, um:
• sich selbst in Echtzeit zu konfigurieren, um die zweite Vielzahl von Schritten auszuführen;
• den Schritt der zweiten Vielzahl durch Austauschen von Textnachrichten eines Online-Chats und/oder durch Austauschen von Audio-/Audio-Video-Nachrichten eines Audio-/Audio-Video-Online-Chats auszuführen, wobei die Text- und/oder Audio-/Audio-Video-Nachrichten über das Telekommunikationsnetzwerk übertragen werden;
• mindestens einen Teil des digitalen Identitätsreferenzprofils des Benutzers zu analysieren;
• bei einer positiven Analyse, mittels der elektronischen Bedienervorrichtung (3) den Schritt der zweiten Vielzahl zu genehmigen und die Konfiguration, Ausführung des Schritts der zweiten Vielzahl und die Analyse für einen weiteren Schritt der zweiten Vielzahl von Schritten zu wiederholen;
• bei einer negativen Analyse, die Ausführung des Schritts der zweiten Vielzahl von Schritten des Interaktionsprozesses zu wiederholen und die Analyse zu wiederholen, bis die Ausführung der zweiten Vielzahl von Schritten mit positiven Verifizierungen abgeschlossen ist;
und wobei die Servervorrichtung (2) konfiguriert ist, um:
• als Funktion von den erfassten Informationen, die für die Identität des Benutzers repräsentativ sind, ein Referenzprofil digitaler Identität zu generieren, das dem Benutzer (7) der elektronischen Benutzervorrichtung (10) zugeordnet ist, wobei das digitale Identitätsreferenzprofil des Benutzers eine verschlüsselte Textdatei von anonymer Art umfasst;
• das digitale Identitätsreferenzprofil des Benutzers in dem Speicher (8) zu speichern;
und wobei der Speicher (8) konfiguriert ist, um das digitale Identitätsreferenzprofil des Benutzers zu speichern.

9. Elektronisches System nach Anspruch 8, umfassend eine weitere elektronische Benutzervorrichtung eines weiteren Benutzers,
wobei die elektronische Bedienervorrichtung konfiguriert ist, um mit der weiteren elektronischen Benutzervorrichtung Textnachrichten eines Online-Chats und/oder Audio-/Audio-Video-Nachrichten eines Audio-/Audio-Video-Online-Chats während mindestens eines Teils des Zeitintervalls auszutauschen, in dem die elektronische Benutzervorrichtung konfiguriert ist, um mit dem automatisierten Agenten Textnachrichten eines Online-Chats und/oder Audio-/Audio-Video-Nachrichten eines Audio-/Audio-Video-Online-Chats auszutauschen.

## Revendications

1. Procédé mis en œuvre par ordinateur pour l'interaction à distance entre un utilisateur (7) et un agent automatisé (5) et pour l'interaction à distance entre l'utilisateur et un opérateur humain (6), le procédé comprenant :
a) connecter de manière bidirectionnelle le dispositif électronique d'un utilisateur (10) à l'agent automatisé (5) au moyen d'un canal de communication de données par l'intermédiaire d'un réseau de télécommunications (4) comprenant un dispositif serveur (2) ;
b) configurer en temps réel le dispositif électronique de l'utilisateur pour exécuter une étape d'un processus d'interaction, dans lequel le processus d'interaction est partiellement mis en œuvre au moyen d'une première pluralité d'étapes exécutées au moyen de l'interaction entre le dispositif électronique de l'utilisateur (10) et l'agent automatisé (5) par l'intermédiaire du canal de communication de données du réseau de télécommunications ;
c) configurer en temps réel l'agent automatisé (5) pour exécuter ladite étape du processus d'interaction ;
d) exécuter ladite étape de la première pluralité au moyen de l'échange, entre le dispositif électronique de l'utilisateur et l'agent automatisé, des messages texte d'un chat en ligne et/ou au moyen de l'échange de messages audio/audio-vidéo d'un chat en ligne audio/audio-vidéo, dans lequel lesdits messages texte et/ou messages audio/audio-vidéo sont transportés par l'intermédiaire dudit réseau de télécommunications, ladite étape comprenant l'acquisition d'informations représentatives de l'identité d'un utilisateur (7) du dispositif électronique de l'utilisateur (10) ;
e) vérifier, au moyen de l'agent automatisé (5), si l'étape de la première pluralité a été exécutée correctement au moyen du dispositif électronique de l'utilisateur ;
f) en cas de vérification positive, approuver, au moyen de l'agent automatisé (5), l'étape de la première pluralité et répéter c), d), e), f) pour une étape supplémentaire de la première pluralité d'étapes ;
g) en cas de vérification négative, répéter l'exécution de l'étape de la première pluralité d'étapes du processus d'interaction et revenir à e), jusqu'à ce que l'exécution de la première pluralité d'étapes se termine par des vérifications positives ;
h) générer au niveau du dispositif serveur (2), en fonction des informations acquises représentatives de l'identité de l'utilisateur, un profil de référence de l'identité numérique associée à l'utilisateur (7) du dispositif électronique de l'utilisateur (10) ;
i) stocker, dans une mémoire non volatile (8) du dispositif serveur (2), ledit profil de référence de l'identité numérique de l'utilisateur ;
j) connecter de manière bidirectionnelle le dispositif électronique de l'utilisateur (10) à un dispositif électronique opérateur (3) au moyen d'un canal de communication de données par l'intermédiaire du réseau de télécommunications ;
k) configurer en temps réel le dispositif électronique de l'utilisateur pour exécuter une étape du processus d'interaction, dans lequel le processus d'interaction est de plus mis en œuvre au moyen d'une deuxième pluralité d'étapes faisant suite à la première pluralité d'étapes et exécutées au moyen de l'interaction entre le dispositif électronique de l'utilisateur (10) et le dispositif électronique opérateur (3) par l'intermédiaire du canal de communication de données ;
l) configurer en temps réel le dispositif électronique opérateur (3) pour exécuter ladite étape du processus d'interaction ;
m) exécuter ladite étape de la deuxième pluralité au moyen de l'échange, entre le dispositif électronique de l'utilisateur et le dispositif électronique opérateur, de messages texte d'un chat en ligne et/ou au moyen de l'échange de messages audio/audio-vidéo d'un chat en ligne audio/audio-vidéo, dans lequel les messages texte et/ou les messages audio/audio-vidéo sont transportés par l'intermédiaire dudit réseau de télécommunications ;
n) analyser, au moyen du dispositif électronique opérateur (3), au moins une partie du profil de référence de l'identité numérique de l'utilisateur ;
o) en cas d'analyse positive, approuver, au moyen du dispositif électronique opérateur (3), l'étape de la deuxième pluralité et répéter 1), m), n), o) pour une étape supplémentaire de la deuxième pluralité d'étapes ;
p) en cas d'analyse négative, répéter l'exécution de l'étape de la deuxième pluralité d'étapes du processus d'interaction et revenir à n), jusqu'à ce que l'exécution de la deuxième pluralité d'étapes se termine par des vérifications positives,
dans lequel le profil de référence de l'identité numérique est un ensemble d'informations à caractère personnel identifiant l'utilisateur, comprenant notamment le nom et le prénom, la date et le lieu de naissance, l'adresse du domicile, le numéro d'identification fiscale, le numéro de téléphone, l'adresse électronique, les paramètres biométriques du visage de l'utilisateur,
et dans lequel h) comprend générer le profil de référence de l'identité numérique de l'utilisateur comprenant un fichier texte codé de type anonyme.

2. Procédé d'interaction à distance selon la revendication 1, dans lequel le profil de référence de l'identité numérique est un code de hachage.

3. Procédé d'interaction à distance selon les revendications 1 ou 2, comprenant une procédure consistant à vérifier l'identité de l'utilisateur (7) au moyen d'une authentification forte comprenant au moins deux facteurs, dans lequel l'un des deux facteurs comprend un processus d'interaction supplémentaire entre le dispositif électronique de l'utilisateur et le dispositif électronique opérateur et/ou l'agent automatisé, le procédé comprenant :
a1) exécuter ladite étape du processus d'interaction supplémentaire au moyen de l'échange, entre le dispositif électronique de l'utilisateur et le dispositif électronique opérateur et/ou l'agent automatisé, de messages texte d'un chat en ligne et/ou au moyen de l'échange de messages audio/audio-vidéo d'un chat en ligne audio/audio-vidéo, dans lequel les messages texte et/ou les messages audio/audio-vidéo sont transportés par l'intermédiaire dudit réseau de télécommunications, ladite étape comprenant l'acquisition d'informations représentatives de l'identité de l'utilisateur (7) du dispositif électronique de l'utilisateur (10) ;
b1) générer au niveau du dispositif serveur (2), en fonction des informations acquises représentatives de l'identité de l'utilisateur, un profil échantillon de l'identité numérique associée à l'utilisateur (7) du dispositif électronique de l'utilisateur (10) ;
c1) comparer le profil échantillon de l'identité numérique associée à l'utilisateur par rapport au profil de référence d'identité numérique ;
d1) en cas de comparaison négative, générer un message représentatif d'une vérification négative de l'identité de l'utilisateur du dispositif électronique de l'utilisateur ;
d2) en cas de comparaison positive, générer un message représentatif d'une vérification positive de l'identité de l'utilisateur du dispositif électronique de l'utilisateur.

4. Procédé d'interaction à distance selon l'une quelconque des revendications précédentes, dans lequel le processus d'interaction est une procédure d'identification et d'authentification de l'identité de l'utilisateur,
dans lequel la première pluralité d'étapes comprend au moins l'une des étapes suivantes :
- acquérir un document d'identité de l'utilisateur ;
- comparer une photo du visage de l'utilisateur de son document d'identité à une image en temps réel du visage de l'utilisateur acquise au moyen d'une caméra du dispositif électronique de l'utilisateur ;
- effectuer une reconnaissance biométrique du visage de l'utilisateur au moyen d'une pluralité d'images acquises du visage de l'utilisateur, afin de vérifier si l'utilisateur est une personne vivante.

5. Procédé d'interaction à distance selon l'une quelconque des revendications précédentes, dans lequel le processus d'interaction de la première et de la deuxième pluralité d'étapes est l'un des suivants :
- procédure d'identification et d'authentification de l'identité de l'utilisateur distant pour la délivrance d'un certificat numérique associé à l'utilisateur distant ;
- procédure d'identification et d'authentification de l'identité de l'utilisateur distant pour la souscription à distance d'un contrat pour l'utilisateur distant ;
- procédure d'identification et d'authentification de l'identité de l'utilisateur distant pour la réalisation de l'ouverture à distance d'un compte bancaire pour l'utilisateur distant ;
- procédure d'identification et d'authentification de l'identité de l'utilisateur distant pour la réalisation de l'activation à distance d'une carte SIM du Smartphone d'un utilisateur ;
- procédure d'identification et d'authentification de l'identité de l'utilisateur distant pour la réalisation de l'accès à un compte bancaire de l'utilisateur au moyen du site Internet d'une banque.

6. Procédé d'interaction à distance selon l'une quelconque des revendications précédentes, comprenant de plus :
k1) configurer en temps réel un dispositif électronique supplémentaire de l'utilisateur pour exécuter une étape d'un processus d'interaction supplémentaire pendant au moins une partie de l'intervalle de temps au cours duquel le dispositif électronique de l'utilisateur est configuré pour échanger, avec l'agent automatisé, des messages texte d'un chat en ligne et/ou des messages audio/audio-vidéo d'un chat en ligne audio/audio-vidéo, dans lequel le processus d'interaction supplémentaire est mis en œuvre au moyen d'une pluralité d'étapes supplémentaires exécutées au moyen de l'interaction entre le dispositif électronique de l'utilisateur et le dispositif électronique opérateur (3) par l'intermédiaire du canal de communication de données ;
l1) configurer en temps réel le dispositif électronique opérateur (3) pour exécuter ladite étape du processus d'interaction supplémentaire ;
m1) exécuter ladite étape de la pluralité supplémentaire au moyen de l'échange, entre le dispositif électronique supplémentaire de l'utilisateur et le dispositif électronique opérateur, de messages texte d'un chat en ligne et/ou au moyen de l'échange de messages audio/audio-vidéo d'un chat en ligne audio/audio-vidéo, dans lequel les messages texte et/ou les messages audio/audio-vidéo sont transportés par l'intermédiaire dudit réseau de télécommunications ;
n1) analyser, au moyen du dispositif électronique opérateur (3) supplémentaire, au moins une partie d'un profil de référence d'identité numérique supplémentaire d'un utilisateur supplémentaire du dispositif électronique de l'utilisateur supplémentaire ;
o1) en cas d'analyse positive, approuver, au moyen du dispositif électronique opérateur (3), l'étape de la pluralité supplémentaire et répéter l1), m1), n1), o1) pour une étape supplémentaire de la pluralité supplémentaire d'étapes ;
p1) en cas d'analyse négative, répéter l'exécution de l'étape de la pluralité supplémentaire d'étapes du processus d'interaction supplémentaire et revenir à n1), jusqu'à ce que l'exécution de la pluralité supplémentaire d'étapes se termine par des vérifications positives.

7. Support de stockage non transitoire lisible par ordinateur, ledit support de stockage comprenant des portions de code logiciel adaptées à l'exécution des étapes du procédé selon l'une quelconque des revendications précédentes, lorsque ledit programme est exécuté sur un ordinateur.

8. Système électronique (1) pour l'interaction à distance entre un utilisateur (7) et un agent automatisé (5) et pour l'interaction à distance entre l'utilisateur et un opérateur humain (6), le système comprenant :
- un dispositif électronique de l'utilisateur (10) commandé par un utilisateur distant (7) ;
- un dispositif électronique opérateur (3) commandé par un opérateur (6) ;
- un agent automatisé (5) ;
- un réseau de télécommunications (4) configuré pour connecter de manière bidirectionnelle le dispositif électronique de l'utilisateur au dispositif électronique opérateur au moyen d'un canal de communication de données ;
- un dispositif serveur (2) au sein du réseau de télécommunications ;
- une mémoire non volatile (8) configurée pour stocker un profil de référence d'identité numérique associé à l'utilisateur (7) du dispositif électronique de l'utilisateur (10), dans lequel le profil de référence d'identité numérique est un ensemble d'informations à caractère personnel identifiant l'utilisateur, comprenant notamment le nom et le prénom, la date et le lieu de naissance, l'adresse du domicile, le numéro d'identification fiscale, le numéro de téléphone, l'adresse électronique, les paramètres biométriques du visage de l'utilisateur ;
dans lequel le dispositif électronique de l'utilisateur (10) est configuré pour :
• se configurer en temps réel pour exécuter une étape d'un processus d'interaction, dans lequel le processus d'interaction est partiellement mis en œuvre au moyen d'une première pluralité d'étapes exécutées au moyen de l'interaction entre le dispositif électronique de l'utilisateur (10) et l'agent automatisé (5) par l'intermédiaire du canal de communication de données ;
• exécuter ladite étape de la première pluralité au moyen de l'échange avec l'agent automatisé de messages texte d'un chat en ligne et/ou au moyen de l'échange de messages audio/audio-vidéo d'un chat en ligne audio/audio-vidéo, dans lequel lesdits messages texte et/ou les messages audio/audio-vidéo sont transportés par l'intermédiaire dudit réseau de télécommunications, ladite étape comprenant l'acquisition d'informations représentatives de l'identité de l'utilisateur (7) du dispositif électronique de l'utilisateur (10) ;
• en cas de vérification positive de l'exécution correcte de l'étape de la première pluralité d'étapes, répéter lesdites configuration, exécution, vérification pour une étape supplémentaire de la première pluralité d'étapes ;
• en cas de vérification négative de l'exécution correcte de l'étape de la première pluralité d'étapes, répéter ladite exécution de l'étape de la première pluralité et ladite vérification, jusqu'à ce que l'exécution de la première pluralité d'étapes se termine par des vérifications positives ;
• se configurer en temps réel pour exécuter une étape d'un processus d'interaction, dans lequel le processus d'interaction est de plus mis en œuvre au moyen d'une deuxième pluralité d'étapes faisant suite à la première pluralité d'étapes et exécutées au moyen de l'interaction entre le dispositif électronique de l'utilisateur (10) et le dispositif électronique opérateur (3) par l'intermédiaire du canal de communication de données ;
• exécuter ladite étape de la deuxième pluralité au moyen de l'échange avec le dispositif électronique opérateur de messages texte d'un chat en ligne et/ou de l'échange de messages audio/audio-vidéo d'un chat en ligne audio/audio-vidéo, dans lequel les messages texte et/ou les messages audio/audio-vidéo sont transportés par l'intermédiaire dudit réseau de télécommunications ;
• en cas d'analyse positive d'au moins une partie du profil de référence de l'identité numérique de l'utilisateur, répéter ladite configuration, l'exécution de l'étape de la deuxième pluralité et l'analyse pour une étape supplémentaire de la deuxième pluralité d'étapes ;
• en cas d'analyse négative, répéter l'exécution de l'étape de la deuxième pluralité d'étapes du processus d'interaction et ladite analyse d'une partie du profil de référence de l'identité numérique de l'utilisateur, jusqu'à ce que l'exécution de la deuxième pluralité d'étapes se termine par des vérifications positives ;
dans lequel l'agent automatisé est configuré pour :
• se configurer en temps réel pour exécuter la première pluralité d'étapes ;
• vérifier si l'étape de la première pluralité a été exécutée correctement au moyen du dispositif électronique de l'utilisateur ;
• en cas de vérification positive, approuver l'étape de la première pluralité d'étapes et répéter ladite configuration, l'exécution de l'étape de la première pluralité et la vérification pour une étape supplémentaire de la première pluralité d'étapes ; dans lequel le dispositif électronique opérateur est configuré pour :
• se configurer en temps réel pour exécuter la deuxième pluralité d'étapes ;
• exécuter ladite étape de la deuxième pluralité au moyen de l'échange de messages texte d'un chat en ligne et/ou de l'échange de messages audio/audio-vidéo d'un chat en ligne audio/audio-vidéo, dans lequel les messages texte et/ou les messages audio/audio-vidéo sont transportés par l'intermédiaire dudit réseau de télécommunications ;
• analyser au moins une partie du profil de référence de l'identité numérique de l'utilisateur ;
• en cas d'analyse positive, approuver, au moyen du dispositif électronique opérateur (3), l'étape de la deuxième pluralité et répéter ladite configuration, l'exécution de l'étape de la deuxième pluralité et l'analyse pour une étape supplémentaire de la deuxième pluralité d'étapes ;
• en cas d'analyse négative, répéter l'exécution de l'étape de la deuxième pluralité d'étapes du processus d'interaction et répéter ladite analyse, jusqu'à ce que l'exécution de la deuxième pluralité d'étapes se termine par des vérifications positives ;
et dans lequel le dispositif serveur (2) est configuré pour :
• générer, en fonction des informations acquises représentatives de l'identité de l'utilisateur, un profil de référence de l'identité numérique associé à l'utilisateur (7) du dispositif électronique de l'utilisateur (10), dans lequel le profil de référence de l'identité numérique de l'utilisateur comprend un fichier texte codé de type anonyme ;
• stocker, dans la mémoire (8), ledit profil de référence de l'identité numérique de l'utilisateur ; et dans lequel la mémoire (8) est configurée pour stocker ledit profil de référence de l'identité numérique de l'utilisateur.

9. Système électronique selon la revendication 8, comprenant un dispositif électronique de l'utilisateur supplémentaire d'un utilisateur supplémentaire,
dans lequel le dispositif électronique opérateur est configuré pour échanger, avec le dispositif électronique de l'utilisateur supplémentaire, des SMS d'un chat en ligne et/ou des messages audio/audio-vidéo d'un chat en ligne audio/audio-vidéo, pendant au moins une partie de l'intervalle de temps au cours duquel le dispositif électronique de l'utilisateur est configuré pour échanger, avec l'agent automatisé, des SMS d'un chat en ligne et/ou des messages audio/audio-vidéo d'un chat en ligne audio/audio-vidéo.
